# EUROPEAN PATENT APPLICATION

(11) **EP 3 156 002 A1**
(43) Date of publication of application: **19.04.2017**
(21) Application number: 16191499.9
(22) Date of filing: 29.09.2016
(51) Int. Cl.: A61C 17/22, A61C 19/02

(54) **ELECTRIC TOOTHBRUSH TRAVEL CHARGER SPEAKER CASE**

(30) Priority: 16.10.2015 US 201514885399
(71) Applicant: Colgate-Palmolive Company, New York, NY 10022 (US); Omron Healthcare Co., Ltd., Muko-shi, Kyoto 617-0002 (JP)
(72) Inventor: OKAI, Takahide, Piscataway, NJ New Jersey 08854 (US); GATZEMEYER, John, J., Piscataway, NJ New Jersey 08854 (US)
(74) Representative: Thum, Bernhard

(57) **Abstract**

A case (100) for a powered oral care implement and a powered oral care implement and case system. In one aspect, the case may include a housing (110) having a base portion (111) and a cover portion (112) coupled thereto. The base portion may receive a body of a powered oral care implement. The housing (110) may also include a processor (120), an input, charging circuitry (125), and a speaker (126) that are operably coupled together so that the housing can charge the powered oral care implement and output audio signals as audible output. When the body of the powered oral care implement is positioned within the base portion of the housing, the charging circuitry of the housing may charge a power source of the powered oral care implement.

## Description

### BACKGROUND

Other than travel toothbrushes having a bristle portion that is stored within a respective gripping portion, typically by folding or collapsing the bristle portion into the gripping portion, attention is rarely given to the manner in which travel toothbrushes are stored or contained. In some cases, a travel toothbrush is simply tossed in an unprotected state into a bag of mixed toiletries. In other cases, the toothbrush is stored within a container that is functionally unremarkable other than to provide air holes or other venting for the evaporation of residual moisture on the brush. Additional storage considerations are required for travel toothbrushes that are powered. If the toothbrush is powered by batteries, then it may be necessary to store extra batteries, or a battery charger, or both. This may also necessitate the use or carrying of a power charging cord, and in some cases a power adapter or converter if traveling abroad. The number and complexity of peripherals may vary depending on the type of brush, duration of travel, the power supply structure of the various destinations, types and number of brush heads, and the like.

Existing toothbrush containers do not include any functionality other than protection of the toothbrush and, in some instances, charging of the internal power source of the toothbrush. Thus, a need exists for a container for a powered toothbrush that includes functionality in addition to charging in order to entice individual's to brush their teeth such that the additional functionality does not interfere with the charging capabilities of the container.

### BRIEF SUMMARY

The present invention may be directed, in one aspect, to a case for a powered oral care implement. The case may include a housing having a base portion and a cover portion coupled thereto. The base portion may receive a body of a powered oral care implement. The housing may also include a processor, an input, charging circuitry, and a speaker so that the housing can charge the powered oral care implement and output audio signals as audible output. When the body of the powered oral care implement is positioned within the base portion of the housing, the charging circuitry of the housing may charge a power source of the powered oral care implement.

In one embodiment, the invention can be a case for a powered oral care implement comprising: a housing comprising a base portion and a cover portion, the base portion having at least one recess configured to receive a body of a powered oral care implement; a processor, at least one input for operable coupling to an external source, charging circuitry for charging a power source of the powered oral care implement, and a speaker for outputting an audible output operably coupled together and located within the housing; and wherein when the body of the powered oral care implement is positioned within the at least one recess of the base portion of the housing, the charging circuitry of the housing charges the power source of the powered oral care implement.

In another embodiment, the invention can be a powered oral care implement and case system comprising: a powered oral care implement; a case comprising a housing having a base portion and a cover portion, the base portion having a cavity configured to receive a body of the powered oral care implement; the base portion comprising a processor, at least one input for operable coupling to an external source, charging circuitry for charging a power source of the powered oral care implement, and a speaker for outputting an audible output based on audio signals transmitted from the external source, the processor, the at least one input, the charging circuitry, and the speaker operably coupled together; wherein when the body of the powered oral care implement is positioned within the cavity of the base portion of the housing, the charging circuitry of the housing inductively charges the power source of the powered oral care implement.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The invention relates to the following aspects:

A case for a powered oral care implement comprising:
a housing comprising a base portion and a cover portion, the base portion having a cavity configured to receive a body of a powered oral care implement;
a first processor, at least one input for operable coupling to an external source, charging circuitry for charging a power source of the powered oral care implement, and a speaker for outputting an audible output operably coupled together and located within the housing; and
wherein when the body of the powered oral care implement is positioned within the cavity of the base portion of the housing, the charging circuitry of the housing charges the power source of the powered oral care implement.

According to a further aspect of the invention, the cover portion of the housing is hingedly coupled to the base portion of the housing to be alterable between a closed position in which the powered oral care implement is completely enclosed within the housing and an open position in which the powered oral care implement is accessible.

According to a further aspect of the invention, the at least one input comprises an audio input that is operably coupled to the speaker for transmitting audio signals from the external source to the speaker when the external source is operably coupled to the audio input, the speaker outputting the audio signals transmitted from the external source as the audible output.

According to a further aspect of the invention, the base portion of the housing further comprises a slot configured to receive a memory device, and wherein the slot is operably coupled to the speaker so that when the memory device is positioned within the slot, audio signals stored on the memory device are transmitted to the speaker, the speaker outputting the audio signals of the memory device as the audible output.

According to a further aspect of the invention, the case further comprising a rechargeable power source positioned within the housing and operably coupled to the charging circuitry and the speaker to provide electrical energy to both the charging circuitry and the speaker, wherein the at least one input comprises a power input that is configured to be operably coupled to an external power source, the power input being operably coupled to the rechargeable power source for charging the rechargeable power source when the power input is operably coupled to the external power source.

According to a further aspect of the invention, the case further comprising a charging sensing circuit operably coupled to the first processor and configured to monitor whether the charging circuitry is in a charging state in which the charging circuitry is charging the power source of the powered oral care implement or a non-charging state in which the charging circuitry is not charging the power source of the powered oral care implement.

According to a further aspect of the invention, the charging circuitry is in the charging state when the powered oral care implement is positioned within the cavity and the power source of the powered oral care implement is not fully charged, and wherein the charging circuitry is in the non-charging state when the powered oral care implement is not positioned within the cavity and when the powered oral care implement is positioned within the cavity and the power source of the powered oral care implement is at a full charge.

According to a further aspect of the invention, when the charging circuitry is in the non-charging state, the rechargeable power source and the external power source are prevented from transmitting electrical energy to the charging circuitry.

According to a further aspect of the invention, at least one of the rechargeable power source and the external power source transmits electrical energy to the speaker when the charging circuitry is in both the charging and non-charging states so that the speaker can output the audible output when the charging circuitry is in both the charging and non-charging states.

According to a further aspect of the invention, the rechargeable power source and the external power source are prevented from transmitting electrical energy to the speaker when the charging circuitry is in the charging state so that the speaker is prevented from outputting the audible output when the charging circuitry is in the charging state; and wherein at least one of the rechargeable power source and the external power source transmits electrical energy to the speaker when the charging circuitry is in the non-charging state so that the speaker can output the audible output when the charging circuitry is in the non-charging state.

According to a further aspect of the invention, the case further comprising a first voltage sensing circuit operably coupled to the first processor, wherein the first voltage sensing circuit is configured to monitor a first charge level of the rechargeable power source of the housing, and wherein when the first charge level reaches a predetermined lower threshold, the first processor prevents the rechargeable power source from transmitting electrical energy to the speaker.

According to a further aspect of the invention, the predetermined lower threshold is an amount of energy sufficient to charge the power source of the powered oral care implement to operate for a single toothbrushing regimen.

According to a further aspect of the invention, the predetermined lower threshold is an amount of energy sufficient to charge the power source of the powered oral care implement to a full charge.

According to a further aspect of the invention, the case further comprising:
a first voltage sensing circuit operably coupled to the first processor and configured to monitor a first charge level of the rechargeable power source of the housing; and
a second voltage sensing circuit operably coupled to a second processor located within the powered oral care implement, the second voltage sensing circuit configured to monitor a second charge level of the power source of the powered oral care implement.

According to a further aspect of the invention, when, based on a value of the second charge level, the first charge level comprises a minimum amount of energy sufficient to charge the power source of the powered oral care implement to a predetermined level, the first processor prevents the rechargeable power source from transmitting electrical energy to the speaker.

According to a further aspect of the invention, the predetermined level is an amount of energy sufficient to enable the powered oral care implement to operate for a single toothbrushing regimen.

According to a further aspect of the invention, the predetermined level is a full charge of the power source of the powered oral care implement.

According to a further aspect of the invention, the charging circuitry of the housing charges the power source of the powered oral care implement via electromagnetic induction.

According to a further aspect of the invention, upon the powered oral care implement being removed from the cavity of the base portion of the housing, the speaker of the housing outputs the audible output for a predetermined period of time.

According to a further aspect of the invention, a predetermined period of time after the powered oral care implement is removed from the cavity of the base portion of the housing, the speaker outputs the audible output.

According to a further aspect of the invention, the case further comprising at least one control button located on the housing, the at least one control button controlling operation of the speaker.

According to a further aspect the invention relates to a powered oral care implement and case system comprising:
a powered oral care implement;
a case comprising a housing having a base portion and a cover portion, the base portion having a cavity configured to receive a body of the powered oral care implement;
the base portion comprising a processor, at least one input for operable coupling to an external source, charging circuitry for charging a power source of the powered oral care implement, and a speaker for outputting an audible output based on audio signals transmitted from the external source, the processor, the at least one input, the charging circuitry, and the speaker operably coupled together;
wherein when the body of the powered oral care implement is positioned within the cavity of the base portion of the housing, the charging circuitry of the housing inductively charges the power source of the powered oral care implement.

According to a further aspect of the invention, the cover portion of the housing is hingedly coupled to the base portion of the housing to be alterable between an open position in which the cavity is accessible and a closed position in which the cavity is enclosed within the housing.

According to a further aspect of the invention, the at least one input comprises at least one of a USB port configured to be operably coupled to one of an external power source or an external audio source and a memory slot configured to receive a memory device.

According to a further aspect of the invention, when the USB port is operably coupled to the external power source, electrical energy is transmitted from the external power source to the speaker; and wherein when the USB port is operably coupled to the external audio source, audio signals are transmitted from the external audio source to the speaker.

According to a further aspect of the invention, the base portion further comprises a rechargeable power source operably coupled to the charging circuitry and to the speaker, wherein the at least one input comprises a power input that is configured to be operably coupled to an external power source, the power input being operably coupled to the rechargeable power source for charging the rechargeable power source when the power input is operably coupled to the external power source.

According to a further aspect of the invention, the system further comprising a charging sensing circuit operably coupled to the processor and configured to monitor whether the charging circuitry is in a charging state in which the charging circuitry is charging the power source of the powered oral care implement or a non-charging state in which the charging circuitry is not charging the power source of the powered oral care implement; and wherein the charging circuitry is in the charging state when the powered oral care implement is positioned within the cavity and the power source of the powered oral care implement is not fully charged, and wherein the charging circuitry is in the non-charging state when the powered oral care implement is not positioned within the cavity and when the powered oral care implement is positioned within the cavity and the power source of the powered oral care implement is at a full charge.

According to a further aspect of the invention, when the processor determines that the charging circuitry is in the non-charging state, the rechargeable power source and the external power source are prevented from transmitting electrical energy to the charging circuitry.

According to a further aspect of the invention, at least one of the rechargeable power source and the external power source transmits electrical energy to the speaker when the charging circuitry is in the charging state and the non-charging state so that the speaker can output the audible output when the charging circuitry is in both the charging and non-charging states.

According to a further aspect of the invention, the rechargeable power source and the external power source are prevented from transmitting electrical energy to the speaker when the charging circuitry is in the charging state so that the speaker is prevented from outputting the audible output when the charging circuitry is in the charging state; and wherein at least one of the rechargeable power source and the power input transmits electrical energy to the speaker when the charging circuitry is in the non-charging state so that the speaker can output the audible output when the charging circuitry is in the non-charging state.

According to a further aspect of the invention, the system further comprising a voltage sensing circuit operably coupled to the processor and configured to monitor a first charge level of the rechargeable power source of the base portion of the housing, and wherein when the first charge level reaches a predetermined lower threshold, the processor prevents the rechargeable power source from transmitting electrical energy to the speaker.

According to a further aspect of the invention, the predetermined lower threshold is one of: (1) an amount of energy sufficient to charge the power source of the powered oral care implement to operate for a single toothbrushing regimen; and (2) an amount of energy sufficient to charge the power source of the powered oral care implement to a full charge.

### BRIEF DESCRIPTION OF THE DRAWINGS

The present invention will become more fully understood from the detailed description and the accompanying drawings, wherein:
Figure 1A is a front view of a case for a powered oral care implement in accordance with an embodiment of the present invention, wherein the case is in a closed state.
Figure 1B is a perspective view of the case of FIG. 1A.
Figure 1C is a left-side view of the case of FIG. 1A.
Figure 1D is a rear view of the case of FIG. 1.
Figure 2A is a front view of the case of FIG. 1A in an open state.
Figure 2B is a perspective view of the case of FIG. 2A.
Figure 2C is a left-side view of the case of FIG. 2A.
Figure 3 is a front view of a powered oral care implement that can be stored within the case of FIG. 1A in accordance with an embodiment of the present invention.
Figure 4 is a functional block diagram of electrical components of the case of FIG. 1A in accordance with an embodiment of the present invention.

### DETAILED DESCRIPTION

The following description of the preferred embodiment(s) is merely exemplary in nature and is in no way intended to limit the invention, its application, or uses.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

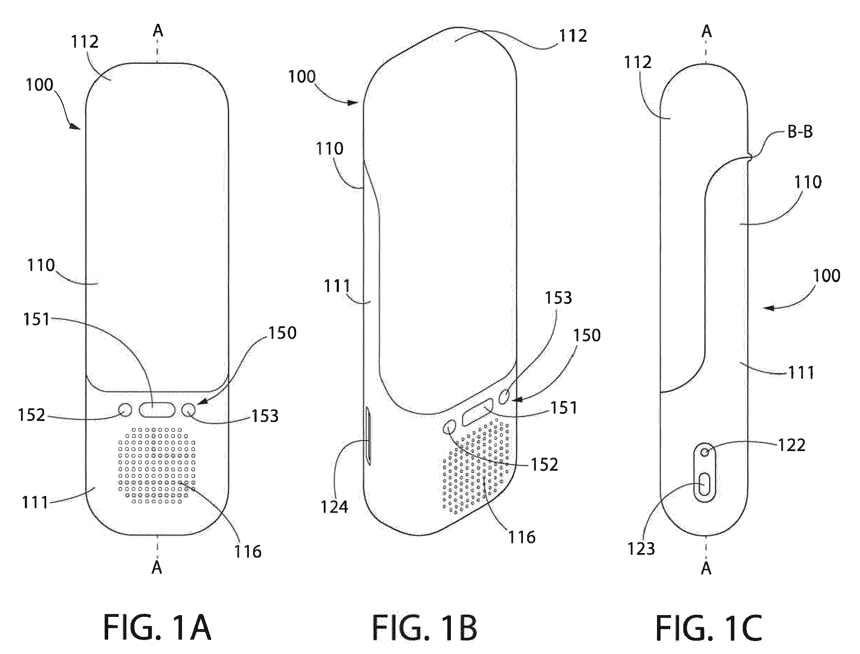

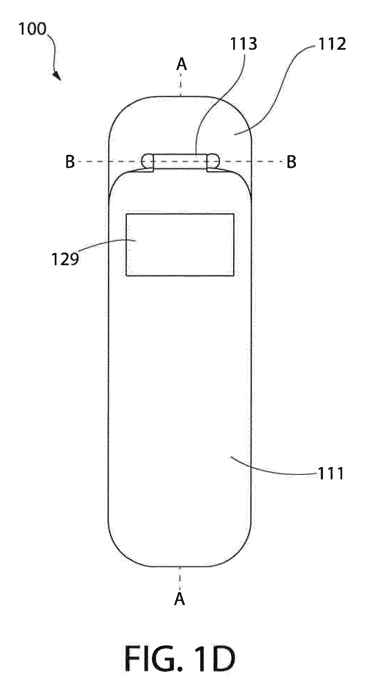

Referring to FIGS. 1A-2C concurrently, a case 100 for containing a powered toothbrush 200 will be described in accordance with a first embodiment of the present invention. In certain embodiments, the invention may be directed to the case 100. In other embodiments, the invention may be directed to a system that includes the case 100 and the powered toothbrush 200.

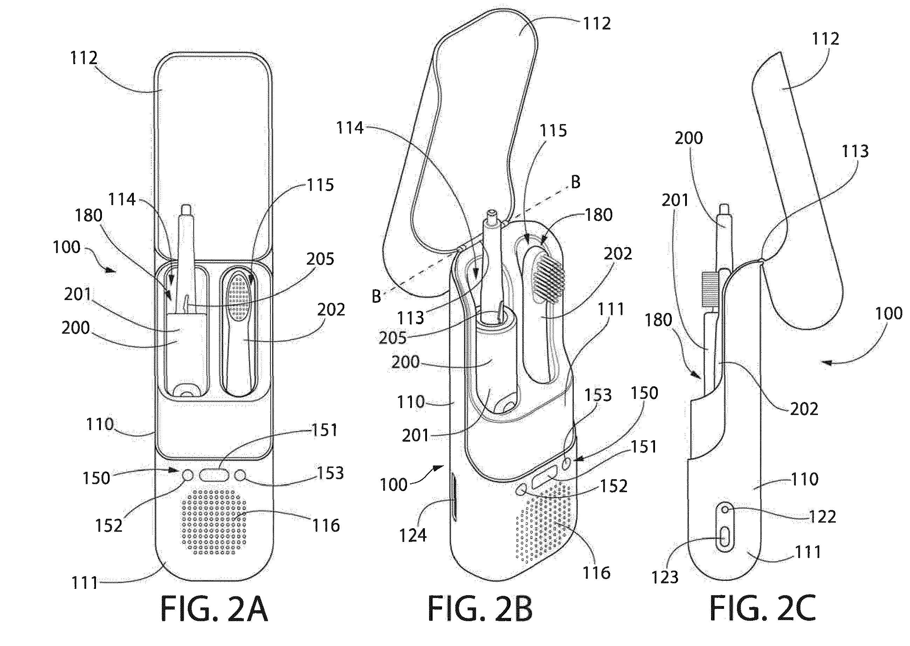

The case 100 generally comprises a housing 110 having a base portion 111 and a cover portion 112. The housing 110 generally extends along a longitudinal axis A-A. In the exemplified embodiment, the cover portion 112 is coupled to the base portion 111 by a hinge 113. Of course, the invention is not to be so limited in all embodiments and in other embodiments the cover portion 112 may be a separate component from the base portion 111 such that the cover portion 112 is completely separable from the base portion 111. Nonetheless, in the exemplified embodiment the hinge 113 extends along an axis B-B that is generally transverse to the longitudinal axis A-A of the housing 110. Thus, in the exemplified embodiment the cover portion 112 is movable relative to the base portion 111 about the hinge 113 so as to be alterable between a closed position (FIGS. 1A-1C) and an open position (FIGS. 2A-2C).

In certain embodiments, the powered toothbrush 200 may be located within the housing 110. In such embodiments, when the cover portion 112 of the housing 110 is in the closed position, the powered toothbrush 200 is completely enclosed within the housing 110 and when the cover portion 112 of the housing 110 is in the open position, the powered toothbrush 200 is accessible. Thus, in the closed position the powered toothbrush 200 is protected against damage during travel or otherwise and in the open position the powered toothbrush 200 can be positioned into and removed from the housing 110 of the case 100 as desired for storage and use.

In the exemplified embodiment, the base portion 111 of the housing 110 has a cavity 180 that is configured to receive the powered toothbrush 200 therein. Specifically, in the exemplified embodiment the cavity 180 comprises a first recess 114 that is configured to receive a body 201 of the powered toothbrush 200 and a second recess 115 that is configured to receive a refill head 202 of the powered toothbrush 200. Specifically, in this embodiment when the powered toothbrush 200 is stored within the case 100, the powered toothbrush 200 is first taken apart such that the refill head 202 of the powered toothbrush 200 is separated from the body 201 of the powered toothbrush 200. The body 201 of the powered toothbrush 200 is then positioned within the first recess 114 of the base portion 111 of the housing 110 and the refill head 202 of the powered toothbrush 200 is positioned within the second recess 115 of the base portion 111 of the housing 110. Of course, the invention is not to be so limited in all embodiments and in certain other embodiments the base portion 111 of the housing 110 may only include a single cavity for containing the powered toothbrush 200.

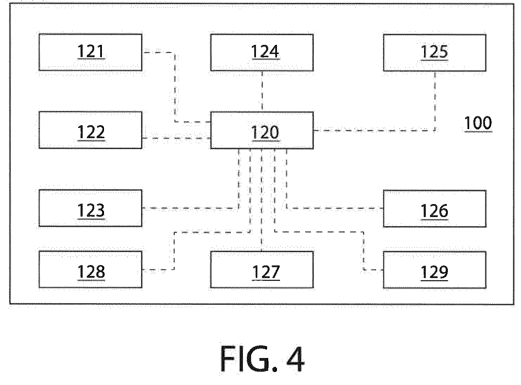

In the exemplified embodiment, each of the first and second recesses 114, 115 are elongated in the direction of the longitudinal axis A-A of the housing 110. Furthermore, the first and second recesses 114, 115 are spaced apart from one another within the base portion 111 of the housing 110 and are oriented in a parallel manner relative to one another. Of course, other orientations of the first and second recesses 114, 115 are possible within the scope of the present invention. It is noted that certain structural details of the case 100 that may be omitted herein are disclosed in United States Patent Application Publication No. 2014/0150189, filed on November 26, 2013, the entirety of which is incorporated herein by reference. Furthermore, a discussion of the electronic components that are housed within the case 100 will be provided below with reference to Figures 1A-2C and 4.

Although described herein as having a powered toothbrush 200 housed within the case 100, the invention is not to be so limited in all embodiments. In other embodiments, the case 100 may be used to house any type of powered oral care implement, such as, without limitation, a tongue scraper, a gum and soft tissue cleanser, a water pick, an interdental device, a tooth polisher, a specially designed ansate implement having tooth engaging elements or any other type of implement that is commonly used for oral care. Furthermore, in other embodiments the case 100 may be used to house manual oral care implements of the types noted above. Thus, it is to be understood that the inventive concepts discussed herein can be applied to any type of oral care implement unless a specific type of oral care implement is specified in the claims.

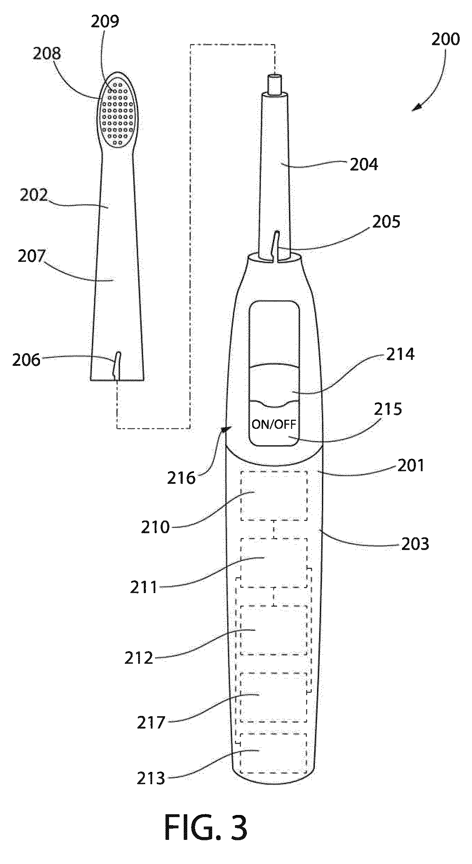

Referring briefly to FIG. 3, the powered toothbrush 200 will be described. As noted above, the powered toothbrush 200 comprises a body 201 and a refill head 202. The body 201 of the powered toothbrush 200 generally comprises a gripping portion 203 and a stem portion 204. The gripping portion 203 of the body 201 of the powered toothbrush 200 is an elongated structure that provides the mechanism by which the user can hold and manipulate the powered toothbrush 200 during use. The gripping portion 203 can take on a wide variety of shapes, contours and configurations, none of which are limiting of the present invention.

The stem portion 204 of the powered toothbrush 200 is the portion of the powered toothbrush 200 to which the refill head 202 may be coupled. Thus, the stem portion 204 is an elongated structure that extends/protrudes axially from the gripping portion 203 and provides the mechanism by which the refill head 202 is detachably coupled to the body 201 of the powered toothbrush 200. In that regard, in the exemplified embodiment the stem portion 204 of the body 201 of the powered toothbrush 200 includes at least one connector 205 that mates with a connector 206 on the refill head 202 to removably couple the refill head 202 to the stem portion 204. The connectors 205, 206 may be a mating boss/slot structure that facilitates the coupling of the refill head 202 to the stem portion 204 or any other mechanical structure that facilitates such coupling in a detachable manner including without limitation magnets, adhesion, fasteners, tight-fit assembly, coupling sleeve, threaded engagement, or the like. Non-limiting examples of the connectors 205, 206 that may be used for coupling the refill head 202 to the stem portion 204 are described in International Publication Nos. WO2013/101300 filed June 18, 2012 and WO2014/093059 filed December 3, 2013, the entireties of which are incorporated herein by reference.

The refill head 202 comprises a sleeve portion 207 and a head portion 208. The sleeve portion 207 is hollow such that it has an inner surface that defines a cavity into which the stem portion 204 of the body 201 is disposed when the refill head 202 is detachably coupled to the body 201. Thus, the cavity of the sleeve portion 207 is sized and shaped to receive and accommodate the stem portion 204 of the body 201 of the powered toothbrush 200 when the refill head 202 is coupled to the body 201 of the powered toothbrush 200. The head portion 208 comprises a plurality of tooth cleaning elements 209 extending therefrom. Although not exemplified herein, in some embodiments the head portion 208 may also include a soft tissue cleaner positioned on the side of the head portion 208 opposite to that which the plurality of tooth cleaning elements 209 extend.

The plurality of tooth cleaning elements 209 are provided on the head portion 208 of the refill head 202 for cleaning and/or polishing an oral surface and/or interdental spaces. The tooth cleaning elements can be particularly suited for brushing teeth, or can be particularly suited to polish teeth instead of or in addition to cleaning teeth. As used herein, the term "tooth cleaning elements" is used in a generic sense to refer to any structure that can be used to clean, polish, or wipe the teeth and/or soft oral tissue (e.g. tongue, cheek, gums, etc.) through relative surface contact. Common examples of "tooth cleaning elements" include, without limitation, bristle tufts, filament bristles, fiber bristles, nylon bristles, spiral bristles, rubber bristles, elastomeric protrusions, flexible polymer protrusions, combinations thereof and/or structures containing such materials or combinations. Suitable elastomeric materials include any biocompatible resilient material suitable for uses in an oral hygiene apparatus. To provide optimum comfort as well as cleaning benefits, the elastomeric material of the tooth or soft tissue engaging elements has a hardness property in the range of A8 to A25 Shore hardness. One suitable elastomeric material is styrene-ethylene/butylene-styrene block copolymer (SEBS) manufactured by GLS Corporation. Nevertheless, SEBS material from other manufacturers or other materials within and outside the noted hardness range could be used.

The tooth cleaning elements of the present invention can be connected to the refill head 202 in any manner known in the art. For example, staples/anchors, in-mold tufting (IMT) or anchor free tufting (AFT) could be used to mount the cleaning elements/tooth engaging elements. In AFT, a plate or membrane is secured to the brush head such as by ultrasonic welding. The bristles extend through the plate or membrane. The free ends of the bristles on one side of the plate or membrane perform the cleaning function. The ends of the bristles on the other side of the plate or membrane are melted together by heat to be anchored in place. Any suitable form of cleaning elements may be used in the broad practice of this invention. Alternatively, the bristles could be mounted to tuft blocks or sections by extending through suitable openings in the tuft blocks so that the base of the bristles is mounted within or below the tuft block.

Included within the gripping portion 203 of the body 201 of the powered toothbrush 200 are a drive system 210, a second processor 211, a power source 212, a second voltage sensing circuit 217, and a recharging circuit 213 that are all operably coupled together. The drive system 210 may include an electric motor and other electrical circuitry and components necessary to create a desired motion at the refill head 202/tooth cleaning elements 209 when the refill head 202 is coupled to the stem portion 204 of the body 201. In certain embodiments, the drive system 210 may include a motor that is coupled to a drive shaft that imparts a desired motion to the refill head 202 through the stem portion 204 of the body 201. In other embodiments the drive system 210 may include a vibratory element (such as can be achieved with an eccentric) operably coupled to the power source 212 for imparting a desired motion to the refill head 202 of the powered toothbrush 200 to achieve a desired cleaning of a user's teeth. Thus, the drive system 210 may be any system which imparts movement or vibration to the refill head 202 when the refill head 202 is coupled to the body 201 of the powered toothbrush 200 to enhance the cleaning effect on a user's teeth and gums during use of the powered toothbrush 200 for oral hygiene activities.

The drive system 210 may be driven by the power source 212. The power source 212 may comprise batteries or any other component that is capable of storing energy for conversion into electrical energy that can be transmitted to electronic devices for powering the electronic devices. In certain preferred embodiments, the power source 212 comprises batteries that are rechargeable. In that regard, the recharging circuit 213 may include all of the necessary circuitry for recharging the power source 212. Specifically, in certain embodiments the recharging circuit 213 may include a coil that receives power inductively from power in the case 100 or otherwise that is then transmitted to the power source 212 for storage therein. The recharging circuit 213 may also receive power or electrical energy directly from any power source, including a wall socket or the like. Finally, the second processor 211, which is operably coupled to the power source 212, the recharging circuit 213, and to the drive system 210, controls the operation of those components. Thus, the second processor 211 is configured to perform all of the functions for processing signals, performing computer-readable instructions, and reading from and writing to a memory when such a memory is included in the powered toothbrush 200.

The second voltage sensing circuit 217 is a circuit that is coupled to the second processor 211. Specifically, the second voltage sensing circuit 217 is configured to monitor the charge level of the power source 212 of the powered toothbrush 200. The second voltage sensing circuit 217 sends data indicative of the power/charge level of the power source 212 of the powered toothbrush 200 to the second processor 211 so that the second processor 211 can make a determination regarding whether or not the power source 212 needs to be charged. Furthermore, the second processor 211 may communicate with a processor of the housing 100 to determine whether electrical energy stored within the housing 100 should be reserved for recharging the power source 212 of the powered toothbrush 200 (rather than using the electrical energy stored within the housing 100 for some other purpose, such as powering a speaker as described below).

In the exemplified embodiment, the gripping portion 203 also includes a user interface 214 that permits a user to control the various operations of the powered toothbrush 200, including without limitation turning off and on, changing speeds of the motor, or other included functions. The gripping portion 203, in essence, forms a watertight housing for the aforementioned electrical circuit and mechanical components that need to be protected from moisture. In the exemplified embodiment, the user interface 214 includes an on/off switch 215 on an outer surface 216 of the gripping portion 203 of the body 201. The on/off switch 215 can take many forms, including without limitation a push button, a slide switch, a touch activated switch or the like. The particular mechanism by which the powered toothbrush 200 is powered on and off is not to be limiting of the present invention in all embodiments.

Referring now to FIGS. 1A-4 concurrently, the case 100 and its electronic components as well as its electrical interaction with the powered toothbrush 200 will be described. The case 100 comprises a first processor 120, a rechargeable power source 121, an audio input 122, a power input 123, a memory reader or slot 124, charging circuitry 125, a speaker 126, a first voltage sensing circuit 127, a charging sensing circuit 128, and a display 129 that are all operably coupled together. More specifically, each of the above-referenced components may be coupled to the first processor 120 so that the first processor 120 can control operation and functionality of the electronics of the case 100.

The rechargeable power source 121, which may be a battery, is operably coupled to each of the charging circuitry 125, the speaker 126, and the display 129 so that energy stored within the rechargeable power source 121 can be transmitted to each of the charging circuitry 125, the speaker 126, and the display 129 to power those components. Of course, in some embodiments either the speaker 126 or the display 129 may be omitted. Rechargeable batteries store energy in a chemical or other form and convert that energy to electrical energy when needed. Thus, the rechargeable power source 121 will transmit electrical energy to each of the charging circuitry 125 and the speaker 126 as needed, and this transmission of the electrical energy (or the prevention of transmission of electrical energy from the power source 1221 to the charging circuitry 125 and/or to the speaker 126) can be controlled by the first processor 120. In certain embodiments as discussed in more detail below, the first processor 120 may prevent transmission of electrical energy from the rechargeable power source 121 to one of the charging circuitry 125, the speaker 126, and/or the display 129 to preserve the available energy stored in the rechargeable power source 121 and to avoid interference between the charging circuitry 125 and the speaker 126 or display 129.

In the exemplified embodiment, the above-noted electrical components are located within the base portion 111 of the housing 110 of the case 100, although the invention is not to be so limited in all embodiments. The first processor 120 may be any central processing unit (CPU), microprocessor, micro-controller, computational, or programmable device or circuit configured for executing computer program instructions such as code. The first processor 120 may include all the usual ancillary components necessary to form a functional data processing device including without limitation a bus, software and data storage such as volatile and non-volatile memory, input/output devices, graphical user interfaces (GUIs), removable data storage, and wired and/or wireless communication interface devices including Wi-Fi, Bluetooth, LAN, etc. The first processor 120 is configured to perform all of the functions for processing signals, performing computer-readable instructions, and reading from and writing to a memory as desired and necessary to achieve the functionalities described herein.

In the exemplified embodiment, the audio input 122 may be an audio jack or other type of input that is configured for operable coupling to an external audio source, such as a computer, laptop, tablet, smart phone, or other device that stores audio signals that can be transmitted to the first processor 120 and speaker 126 via the audio input 122. The power input 123 may be a USB input or other type of input that is configured for operable coupling to an external power source, such as a computer, a source of AC power (wall socket/outlet), or the like. Although illustrated and described herein as being two different and separate inputs, in certain embodiments the audio input 122 and the power input 123 may be combined into a single input. For example, a USB input may function as both an audio input and a power input (simultaneously or at different times) depending on the type of external device/source that is operably coupled thereto. Furthermore, there may also be a separate video input, or the video signals may also be input via the same input as noted herein above.

In the exemplified embodiment the memory reader 124 is a slot that is formed into the base portion 111 of the housing 110. The slot is sized and configured to receive a memory device, such as a micro memory card or the like. The memory device may store audio signals thereon that can be transmitted to the speaker 126 or to the display 129 via the first processor 120 so that the audio or video signals stored in the memory device can be output as the audible output from the speaker 126.

The display 129 may be any device, such as a screen, that visually provides information to a user. Furthermore, the display 129 may be a user interactive display, such as a touch screen or the like, so that the user can make selections on the display 129 and pass through various menus on the display 129 to obtain desired information. In the exemplified embodiment, the display 129 is positioned on the rear surface of the base portion 111 of the housing 110. Of course, the invention is not to be limited by the location of the display 129 in all embodiments. Thus, in other embodiments the display 129 may be located at any position on the housing 100, including on the front surface of the base portion 111 of the housing 110, the rear surface of the base portion 111 of the housing 100, the inside or outside surfaces of the cover portion 112 of the housing 110, or the like. In embodiments that include the display 129, it is merely desirable to put the display 129 in a location that facilitates viewing by a user. Furthermore, in some embodiments the display 129 may be altogether omitted from the device.

Although hardwire connections are described herein for transmitting audio and/or video data to the speaker 126 and/or to the display 129, the invention is not to be so limited in all embodiments. In certain embodiments the audio and/or video signals may be transmitted wirelessly, such as via WiFi, Bluetooth, or the like. A person of ordinary skill in the art would be capable of modifying the device to achieve such wireless transmission of audio and/or video signals. Furthermore, a person of ordinary skill in the art would also understand how to include any digital-to-analog converters or other necessary format conversion circuitry to ensure that the audio and/or video signals are converted to the proper format for generation/transmission from the housing 100.

In the exemplified embodiment, the case 100 includes perforations or openings 116. The speaker 126 may be located within the case 100 adjacent to or behind the openings 116 so that audible output emitted from the speaker 126 can easily pass through the case 100 to be heard by a user. The speaker 126 is any device that is capable of receiving audio signals and outputting the audio signals as audible output. Although not illustrated herein, the speaker 126 may include an amplifier and any other components necessary to convert signals received from the external source to a form that can be output by the speaker 126 as audible output.

When the audio input 122 is operably coupled to an external audio source, audio signals can be transmitted from the external audio source through the audio input 122 and to the first processor 120, and then from the first processor 120 to the speaker 126 so that the speaker 126 can output the audio signals as audible output. When a memory device is positioned within the memory reader 124, audio signals can be transmitted from the memory device through the memory reader 124 and to the first processor 120, and then from the first processor 120 to the speaker 126 so that the speaker 126 can output the audio signals as audible output. Thus, the case 100 allows for variation in the source of audio signals that are to be output by the speaker 126. The case 100 may also include an internal memory with prestored audio signals for output from the speaker 126 (installed in factory or otherwise) and the case 100 may include a microphone so that audio signals can be recorded by the case 100 and stored in the internal memory (so that the user's voice can be saved in the memory for later reproduction through the speaker 126).

The case 100 may include a user interface 150 to enable a user to control the operation of the speaker 126, including powering on and off, controlling the source of the audio signals output through the speaker 126, controlling the volume of the audible output, and the like. Specifically, the user interface 150 comprises one or more control buttons 151, 152, 153 located on the housing 110 to facilitate control of the operation of the speaker 126. In certain embodiments, a user may manually power on the speaker 126 by actuating one of the control buttons 151, 152, 153 to produce audible output any time that an external audio source is coupled to the audio input 122 or a memory device is located within the memory reader 124. In other embodiments, the speaker 126 may automatically produce audible output based on operation of the powered toothbrush 200, as will be discussed in more detail below.

In certain embodiments one or more of the control buttons 151-153 on the user interface 150 may be a selection button that enables a user to determine whether sound will be transmitted from an external audio source that is operably coupled to the audio input 122 or from a memory device that is located within the memory reader 124. Thus, if a memory device is located within the memory reader 124 and simultaneously an external audio source is operably coupled to the audio input 122, a user can manually determine which of those sources should be the source of audio signals transmitted to and output from the speaker 126 as the audible output.

The first and/or second recesses 114, 115 may form a sound amplifying tube such that the audible output emitted from the speaker 126 transmits upwardly through the first and second recesses 114, 115. In that regard, in certain embodiments the speaker 126 may be located adjacent to the floor of at least one of the first and second recesses 114, 115 so that sound emitted from the speaker 126 will travel up through the recesses 114, 115. Furthermore, in certain embodiments the transverse cross-sectional area of the first and/or second recesses 114, 115 will continuously increase with distance from the floor similar to the shape of a megaphone to further enhance the amplification achieved by the first and/or second recesses 114, 115. In such embodiments, the first and/or second recesses 114, 115 that are acting as a sound amplifying tube will have the shape of a cone such that sound from the speaker 126 will be introduced into the narrower portions of the first and/or second recesses 114, 115 near the floor and sound waves will radiate out the wider open end of the first and/or second recesses 114, 115.

In certain embodiments, openings or perforations may be formed into the housing 110 on the floor and/or surrounding side surfaces of the first and/or second recesses 114, 115 to facilitate the transmission of the audible output through the first and second recesses 114, 115 for sound amplification. In certain embodiments the sound may transmit through the first and second recesses 114, 115 in addition to through the openings 116 in the housing 110, and in other embodiments the openings 116 may be omitted so that the sound only transmits through the first and second recesses 114, 115.

The charging circuitry 125 comprises all of the circuitry necessary to transmit power from the case 100 to the recharging circuit 213 of the powered toothbrush 200 for recharging the power source 212 of the powered toothbrush 200 as needed. In certain embodiments the charging circuitry 125 comprises a coil and the recharging circuit 213 comprises a coil so that power is inductively transferred from the coil of the charging circuitry 125 to the coil of the recharging circuit 213 when the powered toothbrush 200 is positioned within the first recess 114 of the base portion 111 of the housing 110. Thus in certain embodiments, simply by positioning the powered toothbrush 200 in the first recess 114, power is transmitted from the rechargeable power source 121 of the case 100 to the charging circuitry 125 of the case, from the charging circuitry 125 to the recharging circuit 213 of the powered toothbrush, and from the recharging circuit 213 of the powered toothbrush to the power source 212 of the powered toothbrush 200, thereby recharging the power source 212 of the powered toothbrush 200 to enable the powered toothbrush 200 to operate electrically (such as by the power source 212 providing power to the drive system 210 for vibrating the refill head 202). In other embodiments, power is only transmitted from the case 100 to the powered toothbrush 200 for charging the power source 212 of the powered toothbrush 200 when the powered toothbrush 200 is positioned within the recess 114 of the case 100 and the power source 212 of the powered toothbrush 200 is not fully charged. Thus, upon the power source 212 of the powered toothbrush 200 being fully charged, additional power will not be transmitted from the case 100 to the powered toothbrush 200 for further charging of the power source 212. In other embodiments, a wired connection between the powered toothbrush 200 and the case 100 may be used for charging the power source 212 of the powered toothbrush 200 from the rechargeable power source 121 of the case 100.

In certain embodiments, the charging sensing circuit 128 is operably coupled to the first processor 120 of the case 100 and is configured to monitor whether the charging circuitry 125 of the case 100 is in a charging state in which the charging circuitry 125 is charging the power source 212 of the powered toothbrush 200 or a non-charging state in which the charging circuitry 125 of the case 100 is not charging the power source 212 of the powered toothbrush 200. In certain embodiments, the charging circuitry 125 is in the charging state when the powered toothbrush 200 is positioned within the recess 114 of the case 100 and the power source 212 of the powered toothbrush 200 is not fully charged. In certain embodiments the charging circuitry 125 is in the non-charging state when the powered toothbrush 200 is not positioned within the recess 114 or is not positioned deep enough into the recess 114 to activate the inductive (or other) transfer of power from the charging circuitry 125 of the case 100 to the recharging circuit 213 of the powered toothbrush 200. Furthermore, the charging circuitry 125 may also be in the non-charging state when the powered toothbrush 200 is positioned within the recess 114 while the power source 212 of the powered toothbrush 200 is at a full charge. Thus, energy stored in the rechargeable power source 121 can be reserved when the power source 212 of the powered toothbrush 200 is at full charge.

As discussed in detail herein above, the case 100 includes both charging circuitry 125 and the speaker 126 so that the case 100 is able to charge the power source 212 of the powered toothbrush 200 and output audio signals as an audible output so that a user can listen to music or voice commands while performing oral hygiene activities or at any other desired time. Thus, the speaker 126 may emit audible output while the user is brushing his teeth with the powered toothbrush 200, and the speaker 126 may emit audible output at any other desired time such as while the user is taking a shower or performing any other activities. Thus, the case 100 can act as a generic music player in certain embodiments in addition to being a protective housing and charger for the powered toothbrush 200. However, in certain instances there may be interference when the case 100 is charging the powered toothbrush 200 while simultaneously emitting an audible output via the speaker 126. Specifically, because the same power source 121 powers both the charging circuitry 125 and the speaker 126, interference may occur such that either or both of the charging circuitry 125 and the speaker 126 are not receiving adequate electrical energy for operation. Thus, the case 100, and more specifically the first processor 120 of the case, may take active steps to avoid such interference.

Therefore, as noted above the first processor 120 monitors whether the charging circuitry 125 is in a charging state or a non-charging state (via the charging sensing circuit 128). In certain embodiments, when the first processor 120 determines that the charging circuitry 125 is in the non-charging state, the first processor 120 will prevent the rechargeable power source 121 and the power input 123 from transmitting electrical energy to the charging circuitry 125. Specifically, when the first processor 120 determines that the charging circuitry 125 is in the non-charging state, it will be determined that electrical energy need not be transmitted to the charging circuitry 125 because it will not be used for any purpose at that particular time. Thus, in certain embodiments when the charging circuitry 125 is determined to be in the non-charging state, a switch may be opened between the rechargeable power source 121 and the charging circuitry 125 and a switch may be opened between the power input 123 and the charging circuitry 125 to prevent electrical energy from being transmitted to and received by the charging circuitry 125 when the charging circuitry 125 is in the non-charging state. In certain embodiments, opening and closing of such switches can be achieved automatically via instructions from the first processor 120. Of course, other techniques for preventing power transmission to the charging circuitry 125 can be used aside from opening a switch as would be appreciated by those skilled in the art, including the first processor 120 simply controlling transmission of electrical energy from the rechargeable power source 121 and the external power source via the power input 123.

By preventing electrical energy from being transmitted to the charging circuitry 125 when the charging circuitry 125 is in a non-charging state, the rechargeable power source 121 will not be drained of energy without justification. Furthermore, this will also prevent interference between the charging circuitry 125 and the speaker 126 because only the speaker 126 may be receiving electrical energy/power for operation when the charging circuitry 125 is in the non-charging state. In that regard, in certain embodiments at least one of the rechargeable power source 121 and the external power source (via the power input 123) transmits electrical energy to the speaker 126 when the charging circuitry 125 is in both the charging and non-charging states. As a result, in certain embodiments the speaker 126 can output the audible output regardless of whether the charging circuitry 125 is in the charging state or the non-charging state.

However, the invention is not to be so limited in all embodiments. In certain other embodiments, when the charging circuitry 125 is in the charging state, electrical energy is being transmitted from at least one of the rechargeable power source 121 and the external power source via the power input 123 to the charging circuitry 125 to power the charging circuitry 125 for charging. However, the rechargeable power source 121 and the external power source may be prevented from transmitting electrical energy to the speaker 126 when the charging circuitry 125 is in the charging state. This will prevent the speaker 126 from outputting audible output when the charging circuitry 125 is in the charging state, which will prevent interference between the charging circuitry 125 and the speaker 126. Furthermore, in certain embodiments when the charging circuitry 125 is in the non-charging state, at least one of the rechargeable power source 121 and the external power source are permitted to transmit electrical energy to the speaker 126 so that the speaker 126 can output the audible output when the charging circuitry 125 is in the non-charging state. Again, in this embodiment it is permissible for the speaker 126 to be operational only when the charging circuitry 125 is in the non-charging state to prevent interference of the signals therebetween, which could otherwise result in a poor quality audible output or a poor charge from the charging circuitry 125.

Thus, in certain embodiments power is only permitted to be transmitted to one of the charging circuitry 125 and the speaker 126 at a particular time. Thus, if the charging circuitry 125 is in a charging state, power will be transmitted to the charging circuitry 125 but not to the speaker 126. Alternatively, if the charging circuitry 125 is in the non-charging state, power will be transmitted to the speaker 126 but not to the charging circuitry 125. This will allow for the speaker 126 to be operational/powered only when the charging circuitry 125 is in the non-charging state. In other embodiments, power may be transmitted to the speaker 126 regardless of whether the charging circuitry 125 is in the charging or non-charging states, but power will not be transmitted to the charging circuitry 125 when the charging circuitry 125 is in the non-charging state. This will allow for the speaker 126 to be operational/powered when the charging circuitry 125 is in the non-charging state and the charging state, but will reduce power consumption and interference when the charging circuitry 125 is in the non-charging state.

Although the description above is made with regard to powering the speaker 126 and the charging circuitry 125, the same applies to the display 129 when the display 129 is included in the device. Thus, in some embodiments when the charging circuitry 125 is in a charging state, power will not be transmitted to the display 129.

It should be appreciated that if an external power source is operably coupled to the power input 123, electrical energy is transmitted from the external power source through power input 123 to the charging circuitry 125 and the speaker 126, but if no external power source is coupled to the power input 123, electrical energy is transmitted from the rechargeable power source 121 to the charging circuitry 125 and the speaker 126 as long as the rechargeable power source 121 has energy stored therein. This will prevent draining of the energy stored within the rechargeable power source 121 unnecessarily when an external power source is coupled to the power input 123. Stated another way, in certain embodiments when the external power source is coupled to the power input 123 and the powered toothbrush 100 is positioned for charging, the power from the external power source will be transmitted directly to the power source 212 of the powered toothbrush 100.

In addition to preventing interference between the charging circuitry 125 and the speaker 126, the first processor 120 may be configured to ensure that sufficient reserve power is maintained within the rechargeable power source 121 to recharge the power source 212 of the powered toothbrush 200 to a desired charge at any given time. Specifically, the first voltage sensing circuit 127 is configured to monitor the power level of the rechargeable power source 121 in order to reserve power as needed. For example, if the case 100 is being taken on travel to a location that it will not be possible to recharge the rechargeable power source 121 of the case 100, it may be desirable to ensure that the energy stored in the rechargeable power source 121 is not wasted on the speaker 126 (or the display 129), but is instead retained for use to recharge the power source 212 of the powered toothbrush 200. This will ensure that the user will be able to recharge and continue to use the powered toothbrush 200 so that the user can maintain proper oral hygiene, which would seem to be more important than the user's desire to use the speaker 126 or display 129.

In that regard, the first processor 120, in conjunction with the first voltage sensing circuit 127, may be configured to prevent the charge level of the rechargeable power source 121 from dipping below a certain level unless the rechargeable power source 121 is being used to recharge the power source 212 of the powered toothbrush 200. Specifically, as noted above the first voltage sensing circuit 127 may be configured to monitor a first charge level of the rechargeable power source 121 of the case 100. The first voltage sensing circuit 127 may transmit data indicative of the first charge level of the rechargeable power source 121 of the case 100 to the first processor 120 so that the first processor 120 and enable and disable power transmission from the rechargeable power source 121 to the speaker 126 and display 129 as needed to reserve power.

During such monitoring, if and when the first charge level of the rechargeable power source 121 of the case 100 decreases to a predetermined lower threshold, the first processor 120 may prevent the rechargeable power source 121 from transmitting electrical energy to the speaker 126 (or display 129). However, even if the first charge level decreases to the predetermined lower threshold, the first processor 120 will still permit the rechargeable power source 121 to transmit electrical energy to the charging circuitry 125 and to the power source 212 of the powered toothbrush 200 so that the powered toothbrush 200 will be able to be recharged for proper operation. This feature will prevent the speaker 126 from draining the rechargeable power source 121 of the case 100 completely to ensure that some power/energy remains stored in the rechargeable power source 121 of the case 100 for recharging the power source 212 of the powered toothbrush 200.

The predetermined lower charge level may be adjustable by a user using the user interface 150 or the like, or it may be pre-set at the factory. In certain embodiments, it may be desirable to ensure that the rechargeable power source 121 of the case 100 retains sufficient energy to recharge the power source 212 of the powered toothbrush 200 enough to be able to operate for a single oral hygiene regimen (i.e., such as two minutes of operation of the powered toothbrush 200 or three minutes of operation of the powered toothbrush 200, or the like). In that regard, the predetermined lower threshold may be an amount of energy that is sufficient to charge the power source 212 of the powered toothbrush 200 to operate for a single toothbrush regimen. In another embodiment, it may be desirable to ensure that the rechargeable power source 121 of the case 100 retains sufficient energy to fully recharge the power source 212 of the powered toothbrush 200. In that regard, the predetermined lower threshold may be an amount of energy sufficient to charge the power source 212 of the powered toothbrush 200 to a full charge. Of course, the predetermined lower threshold may be an amount between a full charge and a sufficient charge for operation during a single oral hygiene regimen, or an amount that is less than a sufficient charge for operation during a single oral hygiene regimen, in other embodiments.

In certain embodiments, the first voltage sensing circuit 127 may be configured to monitor the first charge level of the rechargeable power source 121 of the case 100 and the second voltage sensing circuit 217 may be configured to monitor a second charge level of the power source 212 of the powered toothbrush 200. In such embodiments, the first processor 120 and the second processor 211 may communicate and use both of these charge levels to determine whether to permit or prevent the transmission of energy from the rechargeable power source 121 to the speaker 126 to ensure that sufficient power remains in the rechargeable power source 121 to charge the power source 212 of the powered toothbrush 200 to a desired level. Thus, in certain embodiments, when the first charge level comprises a minimum amount of energy sufficient to charge the power source 212 of the powered toothbrush 200 to a predetermined level (based on the second charge level), the first processor 120 will prevent the rechargeable power source 121 from transmitting electrical energy to the speaker 126. Thus, when the first charge level is just sufficient to charge the power source 212 to have sufficient power for a single toothbrush regimen, a full charge, or something in between, the first processor 120 will prevent transmission of electrical energy from the rechargeable power source 121 to the speaker 126 so that energy stored in the rechargeable power source 121 is not wasted on the speaker 126 but is instead reserved for recharging the power source 212 of the electric toothbrush.

In certain embodiments, the case 100 and/or the powered toothbrush 200 may include an indicator (not illustrated) to indicate to the user whether or not the speaker 126 and/or display 129 is currently being powered. The indicator may also indicate to the user whether the powered toothbrush 200 is being charged. The indicator may be any user perceptible signal, such as a light, an audible sound, a vibration, or the like. In certain embodiments, the indicator may include multiple lights, one that is illuminated when the speaker 126 is powered, one that is illuminated when the display 129 is powered, and one that is illuminated when the powered toothbrush 200 is being charged. Alternatively, the lights may be illuminated when the speaker 126 and display 129 are not powered and when the powered toothbrush 200 is not being charged. Various permutations of the above can be used to indicate to the user the powered status of the speaker 126 and/or display 129 and the charging status of the powered toothbrush 200.

As noted above, the speaker 126 may be able to be used at any desired time to output an audible output such as music, voice commands, or the like unless power is prevented from reaching the speaker 126 as discussed herein above. In certain embodiments, the speaker 126 may be configured to output the audible output for a desired time period, such as two minutes or three minutes, to indicate to the user the proper end period of a brushing session. Thus, the speaker 126 may be configured to begin outputting the audible output upon the powered toothbrush 200 being removed from the case 100, or a short time period, such as 10 seconds or the like, after the powered toothbrush 200 is removed from the case 100 to allow sufficient time for the user to put dentifrice on the powered toothbrush 200 and begin brushing, or upon the powered toothbrush 200 being removed from the case 100 and powered on. The speaker 126 may continue to output the audible output for a length of time equivalent to a desired brushing session, such as two minutes, three minutes, or the like. At the end of the time period/length of time, the speaker 126 may automatically stop outputting the audible output to inform the user that the time period/length of time has been reached and the user can stop brushing. Alternatively, the speaker 126 may continue to output the audible output such as music, but will output an alert sound (such as a beep or any other readily identifiable sound) at desired intervals (such as at 30 second intervals to indicate when the user should switch brushing regions and/or at the end of two or three minutes to indicate when the user should finish brushing).

In other embodiments, the speaker 126 may be configured to output the audible output at specific time intervals after the powered toothbrush 200 has been removed from the case 100 for brushing. Thus, the speaker 126 may output audible output, such as voice commands, beeps, or any other audible output at, for example, 30 second intervals to instruct a user to brush different areas or quadrants of the mouth upon hearing the audible output. In this manner, the speaker 126 may be used as a device for instructing the user in the proper manner of brushing in terms of the amount of time spent brushing overall and in the various quadrants of the user's mouth.

In other embodiments, the speaker 126 may be powered on as desired by a user to output music or other desired audible outputs at any time, including during use of the powered toothbrush 200, during charging of the powered toothbrush 200, or any other time. In such embodiments, the speaker 126 is not used solely for instructional purposes.

As used throughout, ranges are used as shorthand for describing each and every value that is within the range. Any value within the range can be selected as the terminus of the range. In addition, all references cited herein are hereby incorporated by reference in their entireties. In the event of a conflict in a definition in the present disclosure and that of a cited reference, the present disclosure controls.

While the invention has been described with respect to specific examples including presently preferred modes of carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the spirit and scope of the invention should be construed broadly as set forth in the appended claims.

## Claims

1. A case for a powered oral care implement comprising:
a housing comprising a base portion and a cover portion, the base portion having a cavity configured to receive a body of a powered oral care implement;
a first processor, at least one input for operable coupling to an external source, charging circuitry for charging a power source of the powered oral care implement, and a speaker for outputting an audible output operably coupled together and located within the housing; and
wherein when the body of the powered oral care implement is positioned within the cavity of the base portion of the housing, the charging circuitry of the housing charges the power source of the powered oral care implement.

2. The case according to claim 1, wherein the cover portion of the housing is hingedly coupled to the base portion of the housing to be alterable between a closed position in which the powered oral care implement is completely enclosed within the housing and an open position in which the powered oral care implement is accessible.

3. The case according to any one of claims 1 to 2, wherein the at least one input comprises an audio input that is operably coupled to the speaker for transmitting audio signals from the external source to the speaker when the external source is operably coupled to the audio input, the speaker outputting the audio signals transmitted from the external source as the audible output.

4. The case according to any one of claims 1 to 3, wherein the base portion of the housing further comprises a slot configured to receive a memory device, and wherein the slot is operably coupled to the speaker so that when the memory device is positioned within the slot, audio signals stored on the memory device are transmitted to the speaker, the speaker outputting the audio signals of the memory device as the audible output.

5. The case according to any one of claims 1 to 4, further comprising a rechargeable power source positioned within the housing and operably coupled to the charging circuitry and the speaker to provide electrical energy to both the charging circuitry and the speaker, wherein the at least one input comprises a power input that is configured to be operably coupled to an external power source, the power input being operably coupled to the rechargeable power source for charging the rechargeable power source when the power input is operably coupled to the external power source.

6. The case according to claim 5, further comprising a charging sensing circuit operably coupled to the first processor and configured to monitor whether the charging circuitry is in a charging state in which the charging circuitry is charging the power source of the powered oral care implement or a non-charging state in which the charging circuitry is not charging the power source of the powered oral care implement, wherein optionally the charging circuitry is in the charging state when the powered oral care implement is positioned within the cavity and the power source of the powered oral care implement is not fully charged, and wherein the charging circuitry is in the non-charging state when the powered oral care implement is not positioned within the cavity and when the powered oral care implement is positioned within the cavity and the power source of the powered oral care implement is at a full charge.

7. The case according to claim 6, wherein when the charging circuitry is in the non-charging state, the rechargeable power source and the external power source are prevented from transmitting electrical energy to the charging circuitry, wherein as one option at least one of the rechargeable power source and the external power source transmits electrical energy to the speaker when the charging circuitry is in both the charging and non-charging states so that the speaker can output the audible output when the charging circuitry is in both the charging and non-charging , or wherein as another option the rechargeable power source and the external power source are prevented from transmitting electrical energy to the speaker when the charging circuitry is in the charging state so that the speaker is prevented from outputting the audible output when the charging circuitry is in the charging state; and wherein at least one of the rechargeable power source and the external power source transmits electrical energy to the speaker when the charging circuitry is in the non-charging state so that the speaker can output the audible output when the charging circuitry is in the non-charging state.

8. The case according to any one of claims 5 to 7 further comprising a first voltage sensing circuit operably coupled to the first processor, wherein the first voltage sensing circuit is configured to monitor a first charge level of the rechargeable power source of the housing, and wherein when the first charge level reaches a predetermined lower threshold, the first processor prevents the rechargeable power source from transmitting electrical energy to the speaker, wherein as an option the predetermined lower threshold is an amount of energy sufficient to charge the power source of the powered oral care implement to operate for a single toothbrushing regimen, or wherein as an alternative option the predetermined lower threshold is an amount of energy sufficient to charge the power source of the powered oral care implement to a full charge.

9. The case according to claim 5 further comprising:
a first voltage sensing circuit operably coupled to the first processor and configured to monitor a first charge level of the rechargeable power source of the housing; and
a second voltage sensing circuit operably coupled to a second processor located within the powered oral care implement, the second voltage sensing circuit configured to monitor a second charge level of the power source of the powered oral care implement
wherein as an option when, based on a value of the second charge level, the first charge level comprises a minimum amount of energy sufficient to charge the power source of the powered oral care implement to a predetermined level, the first processor prevents the rechargeable power source from transmitting electrical energy to the speaker.

10. The case according to claim 9 wherein the predetermined level is an amount of energy sufficient to enable the powered oral care implement to operate for a single toothbrushing regimen, or wherein the predetermined level is a full charge of the power source of the powered oral care implement.

11. The case according to any one of claims 1 to 10, wherein the charging circuitry of the housing charges the power source of the powered oral care implement via electromagnetic induction.

12. The case according to any one of claims 1 to 11, wherein upon the powered oral care implement being removed from the cavity of the base portion of the housing, the speaker of the housing outputs the audible output for a predetermined period of time, or wherein a predetermined period of time after the powered oral care implement is removed from the cavity of the base portion of the housing, the speaker outputs the audible output.

13. The case according to any one of claims 1 to 12 further comprising at least one control button located on the housing, the at least one control button controlling operation of the speaker.

14. A powered oral care implement and case system comprising:
a powered oral care implement;
a case comprising a housing having a base portion and a cover portion, the base portion having a cavity configured to receive a body of the powered oral care implement;
the base portion comprising a processor, at least one input for operable coupling to an external source, charging circuitry for charging a power source of the powered oral care implement, and a speaker for outputting an audible output based on audio signals transmitted from the external source, the processor, the at least one input, the charging circuitry, and the speaker operably coupled together;
wherein when the body of the powered oral care implement is positioned within the cavity of the base portion of the housing, the charging circuitry of the housing inductively charges the power source of the powered oral care implement.

15. The system according to claim 14, wherein the cover portion of the housing is hingedly coupled to the base portion of the housing to be alterable between an open position in which the cavity is accessible and a closed position in which the cavity is enclosed within the housing.
